(19) Europäisches Patentamt
European Patent Office
Office européen des brevets

(11) **EP 1 076 166 B1**

(12) **EUROPÄISCHE PATENTSCHRIFT**

(45) Veröffentlichungstag und Bekanntmachung des Hinweises auf die Patenterteilung:
**07.02.2007  Patentblatt 2007/06**

(51) Int Cl.:
*F02D 41/18* (2006.01)   *F02D 33/02* (2006.01)
*F02D 41/14* (2006.01)   *F02D 41/10* (2006.01)

(21) Anmeldenummer: **00114056.5**

(22) Anmeldetag: **06.07.2000**

(54) **Verfahren und Vorrichtung für die Frischluftbestimmung an einer Brennkraftmaschine**

Method and apparatus for the determination of the intake air in an internal combustion engine

Méthode et dispositif pour la détermination de la quantité d'air d'admission d'un moteur à combustion interne

(84) Benannte Vertragsstaaten:
**AT BE CH CY DE DK ES FI FR GB GR IE IT LI LU MC NL PT SE**

(30) Priorität: **12.08.1999  DE 19938260**

(43) Veröffentlichungstag der Anmeldung:
**14.02.2001  Patentblatt 2001/07**

(73) Patentinhaber: **Volkswagen Aktiengesellschaft 38436 Wolfsburg (DE)**

(72) Erfinder:
• **Nitzke, Hans-Georg 38547 Wettmershagen (DE)**
• **Rebohl, Thorsten 38100 Braunschweig (DE)**

(56) Entgegenhaltungen:
EP-A- 0 820 559       WO-A-97/35106
WO-A-99/14476       DE-A- 19 740 914

• **BIDAN P ET AL: "NONLINEAR CONTROL OF A SPARK-IGNITION ENGINE" IEEE TRANSACTIONS ON CONTROL SYSTEMS TECHNOLOGY, IEEE INC. NEW YORK, US, Bd. 3, Nr. 1, 1. März 1995 (1995-03-01), Seiten 4-13, XP000508605 ISSN: 1063-6536**

EP 1 076 166 B1

**Beschreibung**

Die Erfindung betrifft ein Verfahren zum Steuern der Kraftstoffeinspritzmenge einer Brennkraftmaschine, wobei eine in den Brennraum der Kraftmaschine eingespeiste Frischluftmenge $m_{Luft,BR}$ dadurch bestimmt wird, dass der Frischluftstrom in einem Frischluftzufuhrkanal der Kraftmaschine stromaufwärts vor einer Druckstufe gemessen wird und die Frischluftmasse anhand dieses Messwertes berechnet wird und dass Druckänderungen in dem Frischluftzufuhrkanal in einem zwischen der Druckstufe und einem Einlass des Brennraumes liegenden Bereich gemessen werden und diese Druckänderungen bei der Berechnung der Frischluftmasse berücksichtigt werden, gemäß dem Oberbegriff von Anspruch 1. Die Erfindung betrifft ferner eine Steuervorrichtung für die Verbrennung in einer Brennkraftmaschine, mit einem Luftmassensensor und einer Rechenschaltung zum Ermitteln der in einen Brennraum der Brennkraftmaschine eingespeisten Frischluftmasse anhand des von dem Luftmassensensor erfassten Luftmassenstromes und der Drehzahl der Bennkraftmaschine, wobei sie einen Drucksensor und eine Rechenschaltung zum Umrechnen einer Druckänderung in einen Luftverbrauch der Brennkraftmaschine umfasst, gemäß dem Oberbegriff von Anspruch 2.

Moderne Brennkraftmaschinen, insbesondere für Kraftfahrzeuge, sind mit einer Abgasrückführung versehen. Über diese Abgasrückführung wird von der Brennkraftmaschine ausgestoßenes Abgas in einem mit Hilfe eines Regelventils regelbaren Verhältnis mit Frischluft vermischt und der Maschine wieder zugeführt. Die Menge des rückgeführten Abgases sowie des in den Brennraum der Brennkraftmaschine eingespritzten Kraftstoffes werden in Abhängigkeit von einer von einem Luftmassensensor erfassten Frischluftzufuhrmenge geregelt, um den Schadstoffausstoß der Maschine gering zu halten.

Der Luftmassensensor ist im Ansaugtrakt der Maschine angeordnet und ist häufig weit von den Einlassventilen des Brennraums der Maschine entfernt, so dass zwischen dem Sensor und den Ventilen ein beträchtliches Luftspeichervolumen liegen kann. Bei instationären Betriebsphasen der Brennkraftmaschine, d.h. wenn die eindosierte Kraftstoffmasse oder die Drehzahl sich ändern, hat dieses Speichervolumen eine puffernde Wirkung, so dass es zu Abweichungen zwischen dem tatsächlichen Frischluftverbrauch der Kraftmaschine und im von dem Luftmassensensor gemessenen Frischluftstrom kommen kann.

Dieses Problem ist besonders gravierend bei Kraftmaschinen mit Turboaufladung, bei denen die Verbrennungsluft in vorverdichtetem Zustand in die Brennkammern eingelassen wird. Infolge der Verdichtung der Frischluft im Zufuhrkanal genügen bereits geringe Volumina, um einen erheblichen Puffereffekt herbeizuführen. Je größer dieser Puffereffekt ist, um so länger dauert es, bis nach einer instationären Betriebsphase der Kraftmaschine wieder ein stationärer Zustand erreicht ist, in dem die vom Luftmassensensor erfasste Frischluftzufuhrmenge mit der von der Kraftmaschine verbrauchten übereinstimmt und somit eine wirksame Regelung der Verbrennung möglich ist.

Aus der EP 0 820 559 B1 ist ein gattungsgemäßes Verfahren zum modellgestützten Bestimmen der in die Zylinder einer Brennkraftmaschine'einströmenden Luftmasse.

Aus der DE 197 40 914A1 ist eine Einrichtung zum Bestimmen der in die Zylinder einer Brennkraftmaschine mit Lader gelangenden Luft abhängig von Größen wie Drehzahl, Luftdurchsatz im Ansaugrohr, Drosselklappenstellung und Temperatur bekannt. Zusätzlich werden zur Bestimmung der Luftmenge weiter physikalische Zusammenhänge berücksichtigt, nämlich Absauggleichung des Motors, Bilanzgleichung der Füllung im Saugrohr, Durchflussgleichung an der Drosselklappe sowie Bilanzgleichung im Volumen zwischen Drosselklappe und Lader.

Aufgabe der Erfindung ist, ein Verfahren und eine Vorrichtung der o.g. Art anzugeben, das bzw. die auch in instationären Betriebsphasen eine wirksame Regelung erlaubt.

Diese Aufgabe wird erfindungsgemäß durch ein Verfahren der o.g. Art mit den in Anspruch 1 gekennzeichneten Merkmalen und durch eine Steuervorrichtung der o.g. Art mit den in Anspruch 2 gekennzeichneten Merkmalen gelöst. Vorteilhafte Ausgestaltungen der Erfindung sind in den weiteren Ansprüchen beschrieben.

Bei einem Verfahren den o.g. Art ist es erfindungsgemäß vorgesehen, dass aus einem Rauch-Kennfeld, in dem ein minimal zulässiges Luftverhältnis $\lambda_{Min}$ für die Verbrennung in der Brennkraftmaschine mit geringer Partikelemission als Funktion einer Drehzahl $n_{mot}$ der Brennkraftmaschine und einer Wunsch-Einspritzmenge $m_{E,Wunsch}$ abgelegt ist, ein Wert für $\lambda_{Min}$ bestimmt wird und zu der Frischluftmenge $m_{Luft,BR}$ eine maximal zulässige Einspritzmenge $m_{E,RBegr}$ gemäß der Formel

$$m_{E,RBegr} = \frac{\dot{m}_{Luft,BR}}{L_{Min}\,\lambda_{Min}}$$

berechnet wird, wobei $L_{Min}$ das stöchiometrische Verhältnis für die Verbrennung des Kraftstoffes bezeichnet.

Bei einer Steuervorrichtung der o.g. Art ist es erfindungsgemäß vorgesehen, dass ein erstes Speicherelement für ein Rauch-Kennfeld vorgesehen ist, in dem ein minimal zulässiges Luftverhältnis $\lambda_{Min}$ für die Verbrennung in der Brennkraftmaschine mit geringer Partikelemission als Funktion einer Drehzahl $n_{mot}$ der Brennkraftmaschine und einer Wunsch-Einspritzmenge $m_{E,Wunsch}$ abgelegt ist, wobei eine Arithmetikschaltung zum Berechnen einer zulässigen Kraftstoffeinspritzmenge $m_{E,RBegr}$ anhand der Größe des Rauch-Kennfeldes vorgesehen ist.

Dies hat den Vorteil, dass auch in instationären Betriebsphasen der Brennkraftmaschine eine reduzierte Partikelemission erzielt wird.

Das Verfahren ist besonders vorteilhaft anwendbar, wenn die Druckstufe ein Verdichter ist. Grundsätzlich ist es aber in Verbindung mit Druckstufen beliebiger Art anwendbar, die eine Zeitverschiebung zwischen einer Änderung des Frischluftverbrauches der Kraftmaschine und der damit zusammenhängenden Änderung des vom Luftmassensensor gemessenen Frischluftstromes bewirken können.

Die Steuervorrichtung umfasst ferner zweckmäßigerweise einen Temperatursensor zum Erfassen einer Lufttemperatur.

In einer bevorzugten Ausführungsform umfasst die Steuervorrichtung zusätzlich ein zweites Speicherelement für ein zweites Kennfeld, das eine gewünschte Einspritzmenge als Funktion der Drehzahl und eines Steuerparameters wie etwa der Stellung eines Gaspedals des Fahrzeuges angibt.

Die Steuervorrichtung umfasst ferner vorzugsweise eine Schaltung, die unter einer von der zweiten Speichereinrichtung des zweiten Kennfeldes gelieferten Einspritzmenge und der von der Arithmetikschaltung berechneten Einspritzmenge jeweils den kleineren Wert auswählt und dadurch eine Begrenzung der Kraftstoffeinspritzmenge realisiert.

Weitere Merkmale und Vorteile der Erfindung ergeben sich aus der nachfolgenden Beschreibung von Ausführungsbeispielen mit Bezug auf die Zeichnung. Diese zeigt in

Fig. 1      schematisch einen Dieselmotor mit Abgasturboaufladung als Beispiel für eine Brennkraftmaschine, bei der die vorliegende Erfindung anwendbar ist,

Fig. 2      einen ersten Abschnitt der erfindungsgemäßen Steuervorrichtung und

Fig. 3      einen zweiten Abschnitt der Steuervorrichtung.

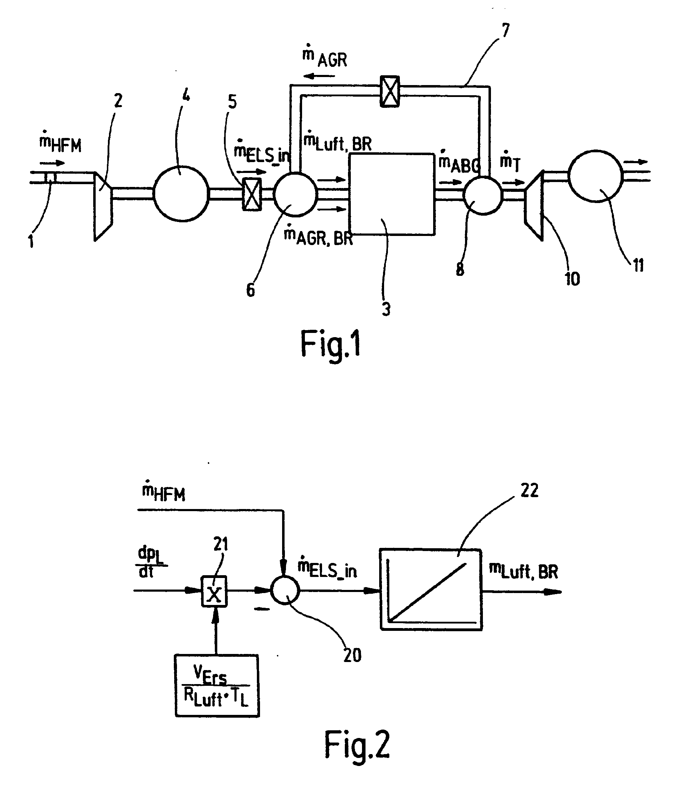

Fig. 1 zeigt in einer idealisierten Darstellung einen Dieselmotor mit Abgasturboaufladung und Abgasrückführung sowie dessen Frischluftversorgungs- und Abgassystem. Ein Luftmassensensor 1 ist in einem Frischluftansaugkanal zwischen einem (nicht dargestellten) Luftfilter und einem Verdichter 2 angeordnet. Zwischen dem Verdichter 2 und dem Einlassventilen des Motors 3 erstrecken sich Leitungen, deren strömungstechnisches Verhalten für die Zwecke der vorliegenden Erfindung durch ein Speichervolumen 4 und eine Drosselstelle 5 beschrieben werden kann. Zwischen der Drosselstelle 5 und dem Motor 3 befindet sich ein Einlasssammler 6, der über eine Abgasrückführleitung 7 mit einem Abgassammler 8 am Abgasauslass des Motors 3 verbunden ist. Die Abgasrückführleitung 7 enthält ein Rückführventil 9, das den Rückstrom von Abgas zum Einlasssammler kontrolliert. Der nicht rückgeführte Anteil des Abgases vom Abgassammler 8 durchläuft eine Turbine 10, wo er auf Atmosphärendruck entspannt wird und dabei den Verdichter 2 antreibt, und erreicht schließlich den Auspuff 11.

Wenn sich der Frischluftbedarf des Motors 3 ändert, z.B. aufgrund einer Beschleunigung, so führt dies zunächst dazu, dass eine erhöhte Frischluftmenge aus dem Speichervolumen 4 abgezogen wird, ohne dass gleichzeitig der Durchsatz des Verdichters 2 entsprechend steigt. Das heißt, dass der Frischluftverbrauch des Motors zunimmt, ohne dass dies zu einer sofortigen Änderung des vom Luftmassensensor 1 gemessenen Stromes $\dot{m}_{HFM}$ führt. Eine Regelung der Kraftstoffeinspritzmenge des Motors 3 oder der vom Rückführventil 9 durchgelassenen Abgasmenge anhand des Messwertes des Luftmassensensors 1 allein kann daher keine optimale Regelung der Verbrennung ermöglichen. Der Luftmassenstrom an der Drosselstelle 5 steht zu dem vom Luftmassensensor 1 gemessenen Strom $\dot{m}_{HFM}$ in der Beziehung

$$\dot{m}_{ELS,in} = \dot{m}_{HFM} - \frac{V_{Ers}}{R_{Luft} T_L} \cdot \frac{dp_L}{dt} \quad , \qquad (1)$$

wobei $V_{Ers}$ das Volumen des Speichers 4, $R_{Luft}$ die allgemeine Gaskonstante für Luft, $T_L$ die Temperatur und $p_L$ den Druck im Speichervolumen 4 bezeichnet.

Die tatsächlich vom Brennraum des Motors 3 innerhalb eines Taktzyklus aufgenommene Frischluftmenge ist gegeben durch

$$m_{Luft,BR} = \int_t^{t+T_0(n_{mot})} \dot{m}_{ELS\_in}(\tau)d\tau \, , \hspace{2cm} (2)$$

wobei $n_{Mot}$ die Motordrehzahl und $T_0(n_{Mot})$ die von der Drehzahl abhängige Taktperiode des Motors bezeichnet.

Figur 2 zeigt schematisch den Aufbau eines Teiles einer Steuerschaltung, die die Brennraum-Fnschtuftmasse $m_{Luft,BR}$ näherungsweise bestimmt. Sie umfasst eine Differenzschaltung 20, die an einem nicht invertierenden Eingang das Signal $\dot{m}_{HFM}$ des Luftmassensensors 1 empfängt und an einem invertierenden Eingang ein Signal empfängt, das dem die Pufferwirkung des Speichervolumens repräsentierenden rechten Term auf der rechten Seite von Formel 1 entspricht. Dieses Signal wird von einem Multiplizierer 21 geliefert, der an einem Eingang ein für die zeitliche Ableitung des Druckes $p_L$ repräsentatives Signal und an einem anderen Eingang ein der Temperatur $T_L$ umgekehrt proportionales Signal empfängt. Das Druckableitungssignal $dp_L/dt$ kann mit Hilfe einer nicht dargestellten Rechenschaltung gewonnen sein, die Signale von einem am Speichervolumen 4 angeordneten Drucksensor empfängt und differenziert. Es kann auch direkt ein differenzierender Drucksensor eingesetzt werden. Das zur Temperatur umgekehrt proportionale Signal, dessen Wert auch vom Speichervolumen $V_{Ers}$ abhängt, kann fest vorgegeben sein, wenn man davon ausgeht, dass die Annahme einer mittleren Ansauglufttemperatur bereits eine hinreichend exakte Regelung erlaubt.

Selbstverständlich kann aber auch am Speicher 4 ein Temperatursensor vorgesehen werden, der es erlaubt, die Temperatur $T_L$ fortlaufend zu messen und in die Berechnung einfließen zu lassen.

Die Differenzschaltung 20 liefert ein Maß für den tatsächlichen Luftstrom in den Motor 3, d.h. für die zeitliche Ableitung $\dot{m}_{ELS\_In}$ der tatsächlich vom Motor 3 angesaugten Luftmenge. Ein Integrator 22 liefert durch Integrieren über die Taktperiode $T_0$ die Masse $m_{Luft,BR}$ der von einer Brennkammer des Motors im Laufe eines Taktzyklus tatsächlich aufgenommenen Frischluft.

Die so bestimmte Brennraum-Frischluftmasse $m_{Luft,BR}$ wird als Eingangsgröße für ein Steuerverfahren benutzt, das dazu dient, Partikelemissionen zu verringern, die in den Phasen instationären Betriebes des Motors 3 erzeugt werden und die durch schnelle Einspritzmengenerhöhungen verursacht werden. Da die Partikelemissionen beim Unterschreiten eines bestimmten Luftverhältnisses $\lambda$ stark ansteigen, muss das Verfahren sicherstellen, dass in Abhängigkeit von der Motordrehzahl und der von einem Fahrer des Kraftfahrzeuges gewünschten und durch mehr oder weniger starkes Betätigen eines Gaspedals spezifizierten Kraftstoff-Wunscheinspritzmenge ein minimales Luftverhältnis $\lambda_{Min}$ nicht unterschritten wird.

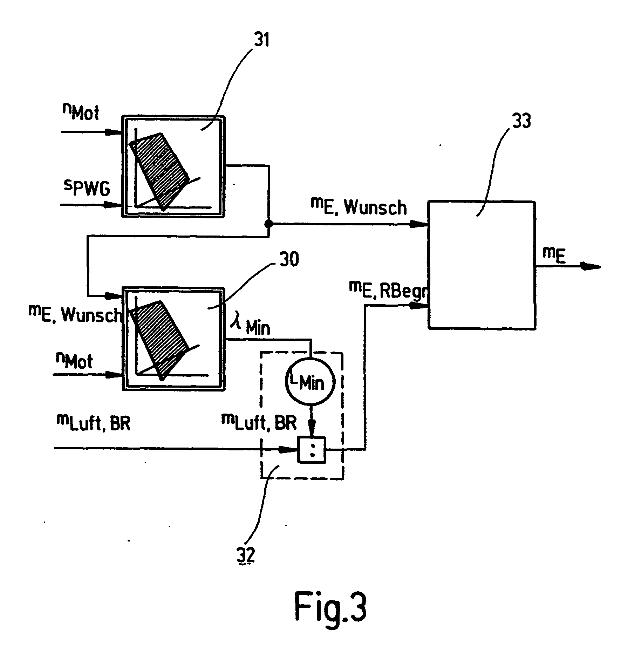

Zu diesem Zweck dient der in Figur 3 dargestellte Teil der Steuerschaltung. Er umfasst ein erstes Speicherelement 30, in dem ein so genanntes Rauch-Kennfeld abgespeichert ist, d.h. ein Satz von Werten einer Größe, die ein minimal zulässiges Luftverhältnis für die Verbrennung in dem Motor 3 als Funktion der Drehzahl $n_{Mot}$ des Motors und einer Wunsch-Einspritzmenge $m_{E,Wunsch}$ angibt. Aus der nach Formel 2 berechneten Frischluftmasse im Brennraum $m_{Luft,BR}$ und dem von dem Rauch-Kennfeld 30 gelieferten minimalen Luftverhältnis $\lambda_{Min}$ lässt sich die maximal zulässige Einspritzmenge nach folgender Formel berechnen

$$m_{E,RBegr} = \frac{m_{Luft,BR}}{L_{Min}\lambda_{Min}} \, , \hspace{2cm} (3)$$

wobei $L_{Min}$ das stöchiometrische Verhältnis für die Verbrennung des Kraftstoffes bezeichnet. Diese maximal zulässige Einspritzmenge wird von der Arithmetikschaltung 32 in Figur 3 berechnet. In der Darstellung der Figur 3 führt die Arithmetikschaltung jeweils eine Multiplikation mit dem festen Faktor $L_{Min}$ und eine Division aus. Stattdessen kann selbstverständlich die im Rauch-Kennfeld 30 gespeicherte Größe von vornherein das Produkt von $\lambda_{Min}$ und $L_{Min}$ umfassen, so dass die Multiplikation entfallen kann. Genauso kann $\lambda_{Min}$ im Rauch-Kennfeld 30 durch seinen Kehrwert ersetzt sein, so dass die Arithmetikschaltung 32 statt einer Division eine - technisch einfachere - Multiplikation ausführt.

Die Wunsch-Einspritzmenge $m_{E,Wunsch}$ wird von einem zweiten Speicherelement 31 geliefert, in dem diese Größe in Form eines zweiten Kennfeldes, als Fahrverhalten-Kennfeld bezeichnet, in Abhängigkeit von der Motordrehzahl $n_{Mot}$ und der Gaspedalstellung $S_{PWG}$ abgespeichert ist.

Eine Minimalwertschaltung 33 empfängt einerseits die Wunsch-Einspritzmenge vom Fahrverhalten-Kennfeld 31 als auch die maximal zulässige Einspritzmenge von der Arithmetikschaltung 32, und gibt jeweils den kleineren der beiden Werte als einen Einspritz-Sollwert $m_E$ aus, der die in die Brennkammern des Motors 3 einzuspritzende Kraftstoffmenge angibt.

Die tatsächlich eingespritzte Kraftstoffmenge wird bei den meisten direkt einspritzenden Dieselmotoren nicht gemessen. Deshalb kann die tatsächlich eingespritzte Kraftstoffmenge von der Sollmenge $m_E$ abweichen. Das würde sich negativ auf die Rauchbegrenzung nach dem oben beschriebenen Steuerverfahren auswirken. Deshalb ist es sinnvoll, eine Korrektur der eingespritzten Kraftstoffmenge in das Verfahren mit einzubeziehen. Diese kann über einen zusätzlichen Sensor erfolgen, der eine Abweichung zwischen Soll- und Ist-Einspritzmenge feststellen kann. So ist es zum Beispiel mit einem am Ausgang des Motors angeordneten Lambda-Sensor möglich, das Luft-Kraftstoffverhältnis nachzumessen. In einem solchen Fall ist die Steuervorrichtung sinnvollerweise ausgelegt, um einen Vergleich zwischen dem für die ermittelte Einspritzmenge $m_E$ erwarteten Luftverhältnis $\lambda$ und dem tatsächlichen, von dem Lambda-Sensor gemessenen durchzuführen und Korrekturmaßnahmen zu ergreifen, wenn eine systematische Abweichung der beiden Werte festgestellt wird. Derartige Maßnahmen können z.B. in einer Änderung des von der Arithmetikschaltung 32 verwendeten Faktors $L_{Min}$ oder auch einer Änderung der Daten der Kennfelder 30, 31 bestehen.

**Patentansprüche**

1. Verfahren zum Steuern der Kraftstoffeinspritzmenge einer Brennkraftmaschine, wobei eine in den Brennraum der Kraftmaschine eingespeiste Frischluftmenge $m_{Luft,BR}$ **dadurch** bestimmt wird, dass der Frischluftstrom in einem Frischluftzufuhrkanal der Kraftmaschine stromaufwärts vor einer Druckstufe gemessen wird und die Frischluftmasse anhand dieses Messwertes berechnet wird und dass Druckänderungen in dem Frischluftzufuhrkanal in einem zwischen der Druckstufe und einem Einlass des Brennraumes liegenden Bereich gemessen werden und diese Druckänderungen bei der Berechnung der Frischluftmasse berücksichtigt werden,
**dadurch gekennzeichnet, dass**
aus einem Rauch-Kennfeld, in dem ein minimal zulässiges Luftverhältnis $\lambda_{Min}$ für die Verbrennung in der Brennkraftmaschine mit geringer Partikelemission als Funktion einer Drehzahl $n_{mot}$ der Brennkraftmaschine und einer Wunsch-Einspritzmenge $m_{E,Wunsch}$ abgelegt ist ein Wert für $\lambda_{Min}$ bestimmt wird und zu der Frischluftmenge $m_{Luft,BR}$ eine maximal zulässige Einspritzmenge $m_{E,RBegr}$ gemäß der Formel

$$\dot{m}_{E,RBegr} := \frac{m_{Luft,BR}}{L_{Min}\,\lambda_{Min}}.$$

berechnet wird, wobei $L_{Min}$ das stöchiometrische Verhältnis für die Verbrennung des Kraftstoffes bezeichnet.

2. Steuervorrichtung für die Verbrennung in einer Brennkraftmaschine, mit einem Luftmassensensor (1) und einer Rechenschaltung (22) zum Ermitteln der in einen Brennraum der Brennkraftmaschine eingespeisten Frischluftmasse anhand des von dem Luftmassensensor (1) erfassten Luftmassenstromes und der Drehzahl der Bennkraftmaschine, wobei sie einen Drucksensor und eine Rechenschaltung (20, 21) zum Umrechnen einer Druckänderung in einen Luftverbrauch der Brennkraftmaschine umfasst,
**dadurch gekennzeichnet, dass**
ein erstes Speicherelement (30) für ein Rauch-Kennfeld vorgesehen ist, in dem ein minimal zulässiges Luftverhältnis $\lambda_{Min}$ für die Verbrennung in der Brennkraftmaschine mit geringer Partikelemission als Funktion einer Drehzahl $n_{mot}$ der Brennkraftmaschine und einer Wunsch-Einspritzmenge $m_{E,Wunsch}$ abgelegt ist, wobei eine Arithmetikschaltung (32) zum Berechnen einer zulässigen Kraftstoffeinspritzmenge $m_{E,RBegr}$ anhand der Größe des Rauch-Kennfeldes vorgesehen ist.

3. Steuervorrichtung nach Anspruch 2, **dadurch gekennzeichnet, dass** diese einen Temperatursensor zum Erfassen einer Lufttemperatur umfasst.

4. Steuervorrichtung nach einer der Ansprüche 2 oder 3, **dadurch gekennzeichnet, dass** diese ein zweites Speicherelement (31) für ein zweites Kennfeld umfasst, das eine gewünschte Einspritzmenge als Funktion der Drehzahl und eines Steuerparameters angibt.

5. Steuervorrichtung nach Anspruch 2 und 4, **gekennzeichnet durch** eine Schaltung (33) zum Auswählen des kleineren Wertes unter einer von der zweiten Speichereinrichtung (31) des zweiten Kennfeldes gelieferten Einspritzmenge und einer von der Arithmetikschaltung (32) berechneten Einspritzmenge.

**Claims**

1.  Method for controlling the fuel injection quantity of an internal combustion engine, with a fresh air quantity $m_{air,BR}$ fed into the combustion chamber of the internal combustion engine being determined in that the fresh air flow in a fresh air supply duct of the internal combustion engine is measured upstream of a pressure stage and the fresh air mass is calculated on the basis of said measured value, and in that pressure changes in the fresh air supply duct are measured in a region situated between the pressure stage and an inlet of the combustion chamber and said pressure changes are included in the calculation of the fresh air mass, **characterized in that** a value for $\lambda_{Min}$ is determined from a smoke characteristic diagram in which a minimum permitted air ratio $\lambda_{Min}$ for combustion in the internal combustion engine with a low level of particulate emissions is stored as a function of a rotational speed $n_{mot}$ of the internal combustion engine and a desired injection quantity $m_{E,desired}$, and a maximum permitted injection quantity $m_{E,RBegr}$ for the fresh air quantity $m_{air,BR}$ is calculated according to the formula

$$m_{E,RBegr} = \frac{m_{air,BR}}{L_{Min}\lambda_{Min}}$$

    where $L_{Min}$ denotes the stoichiometric ratio for the combustion of the fuel.

2.  Control device for the combustion in an internal combustion engine, having an air mass sensor (1) and having a processing circuit (22) for determining the fresh air mass fed into a combustion chamber of the internal combustion engine on the basis of the air mass flow detected by the air mass sensor (1) and the rotational speed of the internal combustion engine, said control device comprising a pressure sensor and a processing circuit (20, 21) for converting a pressure change into an air consumption value of the internal combustion engine, **characterized in that** a first memory element (30) for a smoke characteristic diagram is provided, in which smoke characteristic diagram a minimum permitted air ratio $\lambda_{Min}$ for combustion in the internal combustion engine with a low level of particulate emissions is stored as a function of a rotational speed $n_{mot}$ of the internal combustion engine and a desired injection quantity $m_{E,desired}$, with an arithmetic circuit (32) being provided for calculating a permitted fuel injection quantity $m_{E,RBegr}$ on the basis of the value of the smoke characteristic diagram.

3.  Control device according to Claim 2, **characterized in that** said control device has a temperature sensor for detecting an air temperature.

4.  Control device according to one of Claims 2 or 3, **characterized in that** said control device comprises a second memory element (31) for a second characteristic diagram which specifies a desired injection quantity as a function of the rotational speed and a control parameter.

5.  Control device according to Claims 2 and 4, **characterized by** a circuit (33) for selecting the lower value between an injection quantity provided by the second memory device (31) of the second characteristic diagram and an injection quantity calculated by the arithmetic circuit (32).

**Revendications**

1.  Procédé pour commander la quantité injectée de carburant d'un moteur à combustion interne, une quantité d'air frais $m_{Luft,BR}$ injectée dans la chambre de combustion du moteur à combustion étant déterminée en ce que le courant d'air frais est mesuré en amont avant un étage de pression dans un canal d'arrivée d'air frais du moteur à combustion et la masse d'air frais est calculée au moyen de cette valeur mesurée et en ce que les modifications de la pression dans le canal d'arrivée d'air frais sont mesurées dans une zone qui se trouve entre l'étage de pression et une entrée de la chambre de combustion et ces modifications de la pression sont prises en compte lors du calcul de la masse d'air frais, **caractérisé en ce qu'**une valeur pour $\lambda_{Min}$ est déterminée à partir d'un diagramme caractéristique des fumées dans lequel est consigné un rapport d'air minimum admissible $\lambda_{Min}$ pour la combustion dans le moteur à combustion interne avec une faible émission de particules en fonction d'une vitesse de rotation $n_{mot}$ du

moteur à combustion interne ainsi qu' une quantité injectée souhaitée $m_{E,Wunsch}$ et une quantité injectée maximale admissible $m_{E,RBegr}$ est calculée pour la quantité d'air frais $m_{Luft,BR}$ selon la formule

$$m_{E,RBegr} = \frac{m_{Luft,BR}}{L_{Min}\lambda_{Min}}$$

$L_{Min}$ désignant le rapport stoechiométrique pour la combustion du carburant.

2. Dispositif de commande pour la combustion d'un moteur à combustion interne, comprenant un détecteur de masse d'air (1) et un circuit calculateur (22) destiné à déterminer une masse d'air frais injectée dans la chambre de combustion du moteur à combustion interne au moyen du débit massique d'air détecté par le détecteur de masse d'air (1) et de la vitesse de rotation du moteur à combustion interne, celui-ci comprenant un capteur de pression et un circuit calculateur (20, 21) pour convertir une modification de la pression en une consommation d'air du moteur à combustion interne, **caractérisé en ce qu'**il est prévu un premier élément de mémorisation (30) pour un diagramme caractéristique des fumées dans lequel est consigné un rapport d'air minimum admissible $\lambda_{Min}$ pour la combustion dans le moteur à combustion interne avec une faible émission de particules en fonction d'une vitesse de rotation $n_{mot}$ du moteur à combustion interne ainsi qu'une quantité injectée souhaitée $m_{E,Wunsch}$, un circuit arithmétique (32) étant prévu pour calculer une quantité injectée admissible de carburant $m_{E,RBegr}$ au moyen de la taille du diagramme caractéristique des fumées.

3. Dispositif de commande selon la revendication 2, **caractérisé en ce que** celui-ci comprend un capteur de température pour acquérir une température d'air.

4. Dispositif de commande selon l'une des revendications 2 ou 3, **caractérisé en ce que** celui-ci comprend un deuxième élément de mémorisation (31) pour un deuxième diagramme caractéristique qui indique une quantité injectée souhaitée en fonction de la vitesse de rotation et d'un paramètre de commande.

5. Dispositif de commande selon les revendications 2 et 4, **caractérisé par** un circuit (33) destiné à sélectionner la valeur la plus petite entre une quantité injectée délivrée par le deuxième dispositif de mémorisation (31) du deuxième diagramme caractéristique et une quantité injectée calculée par le circuit arithmétique (32).

Fig.1

Fig.2

8

$n_{Mot}$

$s_{PWG}$

31

$m_{E,\,Wunsch}$

33

$m_E$

30

$m_{E,\,Wunsch}$

$\lambda_{Min}$

$n_{Mot}$

$m_{E,\,RBegn}$

$L_{Min}$

$m_{Luft,\,BR}$

$m_{Luft,\,BR}$

32

# Fig.3